(19) Europäisches Patentamt
European Patent Office
Office européen des brevets

(11) **EP 1 508 592 B1**

(12) **EUROPEAN PATENT SPECIFICATION**

(45) Date of publication and mention
of the grant of the patent:
**16.03.2011 Bulletin 2011/11**

(51) Int Cl.:
***C08L 59/00*** *(2006.01)*

(21) Application number: **03733171.7**

(22) Date of filing: **29.05.2003**

(86) International application number:
**PCT/JP2003/006778**

(87) International publication number:
**WO 2003/102078 (11.12.2003 Gazette 2003/50)**

(54) **POLYACETAL RESIN COMPOSITION**

POLYACETALHARZZUSAMMENSETZUNG

COMPOSITION DE RESINE DE POLYACETAL

(84) Designated Contracting States:
**AT BE BG CH CY CZ DE DK EE ES FI FR GB GR HU IE IT LI LU MC NL PT RO SE SI SK TR**

(30) Priority: **30.05.2002 JP 2002156632**

(43) Date of publication of application:
**23.02.2005 Bulletin 2005/08**

(73) Proprietor: **Polyplastics Co., Ltd.
Tokyo 108-8280 (JP)**

(72) Inventors:
• **KAWAGUCHI, Kuniaki,
Polyplastics Co., Ltd.
Fuji-shi, Shizuoka 416-8533 (JP)**

• **OKAWA, Hidetoshi,
Polyplastics Co., Ltd.
Fuji-shi, Shizuoka 416-8533 (JP)**

• **TAJIMA, Yoshihisa,
Polyplastics Co., Ltd.
Fuji-shi, Shizuoka 416-8533 (JP)**

(74) Representative: **Peel, James Peter
Barker Brettell LLP
10-12 Priests Bridge
London
SW15 5JE (GB)**

(56) References cited:
**EP-A1- 1 215 245        JP-A- 4 193 522
JP-A- 9 241 476         JP-A- 50 030 949
JP-A- 2001 002 887      US-A- 3 980 734
US-A- 4 181 685         US-A1- 2001 007 006**

**Description**

TECHNICAL FIELD OF THE INVENTION

Thepresent inventionrelates toapolyacetal resin composition having high rigidity and being excellent in dimensional stability and creep characteristics.

PRIOR ARTS

A Polyacetal resin has excellent properties in mechanical property, thermal property, electric property, slidability, moldability etc. and has been widely used as mainly structural materials and/or functional parts, etc. in electric instruments, car parts, precision machine parts, etc. However, with the increasing application area of polyacetal resin, the resin is required to satisfy more and more sophisticated, complicated and specialized requirements. By way of example, there is a demand for a material having much more enhanced rigidity, surface hardness, slidability, etc. while maintaining various properties of polyacetar resin itself such as excellent moldability and appearance. For meeting such a demand, the present inventors have proposed a polyacetal resin composition by blending a polyacetal resin with a polyacetal copolymer having branched and/or bridged structures in JP2002-3694A. However, according to their subsequent detail investigation, the polyacetal resin composition has a enhanced rigidity, surface hardness, and slidability, but their dimensional stability and creep characteristics are unsatisfactory.

Wherein, dimensional stability is an important property for mechanical parts such as gears. With poor dimensional stability, elevated temperature within machine results in post-shrinkage of the present composition, and thereby fails to engage a gear. It follows that torque transmission fail. To solve these problems, one of general method is that the composition anneals for a long time below the melting point of the resin after molding, and stabilizes the crystal condition of polyacetal resin, and thereby increases the accuracy of the size. The method needs high production costs and causes durability loss of the molded articles because of the defects resulted inside the molded articles due to the rapid crystal shrinkage just after molding.

Also, in mechanical parts, etc., as there is a need for reducing the deformation under specified loading, and expanding a long life for use in many cases, creep characteristics is also one of important properties. Therefore, there is a further demand for improvement of creep characteristics as well as dimensional stability.

The polyacetal resin composition by blending two or more polyacetal resins having a different properties and structures other than above composition is disclosed in several specifications, for example, JP2001-2886A, JP2001-2885A, JP9-241476A, JP5-279551A, JP4-108848A, JP3-263454A, JP3-756A, JP1-20258A, JP59-129247A, JP50-30949A, JP49-58145A, JP48-97955A, JP48-30749A, JP47-14249A, etc. are known.

However, any polyacetal resin material having high rigidity and excellent in dimensional stability and creep characteristics has not been disclosed in these specifications.

DISCLOSURE OF THE INVENTION

A purpose of the present invention is to solve the above problems and to provide a polyacetal resin composition having high rigidity and being excellent in dimensional stability and creep characteristics.

For achieving the above object, the present inventors have carried out a detail investigation in order to attain the above-described purpose. As a result, they have found that a blend of two polyacetal resins having specified structures and properties allows to provide materials satisfying all of high rigidity, dimensional stability, and creep characteristics, whereupon the present invention has been achieved.

That is, the present invention relates to a polyacetal resin composition prepared by blending

(A) from 99.9 to 90 parts by weight of a linear polyacetal resin having a melt index of 1 to 50 g/10 min obtained by copolymerizing (a) 99.5 to 97.5% by weight of trioxane and (b) 0. 5 to 2.5% by weight of a compound selected from a mono-functional cyclic ether compound and a mono-functional cyclic formal compound, with

(B) from 0.1 to 10 parts by weight of a branched or crosslinked polyacetal resin having a melt index of 0.1 to 10 g/10min obtained by copolymerizing (a) 99.49 to 95.0% by weight of trioxane, (b) 0.5 to 4.0% by weight of a compound selected from a mono-functional cyclic ether compound and a mono-functional cyclic formal compound, and (c) 0.01 to 1.0% by weight of a poly-functional glycidyl ether compound with the number of functional groups of 3 to 4, in which the linear polyacetal resin (A) and the branched or crosslinked polyacetal resin (B) are selected so that the ratio between the melt index of the linear polyacetal resin (A) and the melt index of the branched or crosslinked polyacetal resin (B) satisfies the relation of the following formula (1):

$$0.02 \leqq MI_B/MI_A \leqq 1.5 \quad (1)$$

(wherein $MI_A$ is a melt index of the linear polyacetal resin (A) and $MI_B$ is a melt index of the branched or crosslinked polyacetal resin (B)).

DETAILED DESCRIPTION OF THE INVENTION

The present invention will be explained in detail. First, the linear polyacetal resin (A) used in the present invention is obtained by copolymerizing (a) 99.5 to 97.5% by weight of trioxane and (b) 0.5 to 2.5% by weight of a compound selected from a mono-functional cyclic ether compound and a mono-functional cyclic formal compound, and the linear polyacetal resin has a melt index of 1 to 50 g/10min. Wherein, the melt index as defined herein is measured according to ASTM D-1238 at a temperature of 190 degrees C under a loading of 2160 g.

The trioxane (a) as the base material for producing the linear polyacetal resin (A) is a cyclic trimer of formaldehyde, which is generally obtained by a reacting of an aqueous solution of formaldehyde in the presence of an acid catalyst, and is used after purifying by distillation etc. It is preferred that the trioxane (a) used for the polymerization contains as little as possible of impurities such as water, methanol and formic acid.

The compound (b) selected from mono-functional cyclic ether compounds and mono-functional cyclic formal compounds using for production of the linear polyacetal resin (A) by copolymerization with the trioxane (a) is a compound having one cyclic ether unit or cyclic formal unit in one molecule. The compound (b) includes ethylene oxide, propylene oxide, butylene oxide, epichlorohydrin, epibromohydrin, styrene oxide, oxetane, 3,3-bis(chloromethyl)oxetane, tetrahydrofuran, trioxepane, 1,3-dioxolan, ethylene glycol formal, propylene glycol formal, diethylene glycol formal, triethylene glycol formal, 1,4-butanediol formal, 1,5-pentanediol formal, 1,6-hexanediol formal etc. Among them, at least one compound selected from the group consisting of ethylene oxide, 1,3-dioxolan, 1,4-butanediol formal and diethylene glycol formal is preferably used.

In the linear polyacetal resin (A) used in the present invention, copolymerization rate of the compound (b) selected from these mono-functional cyclic ether compounds and mono-functional cyclic formal compounds is from 0.5 to 2.5% by weight to (a) 99.5 to 97.5% by weight of trioxane. If the copolymerization rate of the compound (b) is lower than the range, the polyacetal resin composition having demanded excellent dimensional stability cannot be easily obtained. On the other hand, if the copolymerization rate of the compound (b) is higher than the range, the polyacetal resin composition having demanded high rigidity, dimensional stability and creep characteristics cannot be easily obtained. Both of the cases are undesirable. Especially preferable copolymerization rate of the compound (b) is from 0.7 to 2.0% by weight.

The linear polyacetal resin (A) used in the present invention is generally obtained, for example, by a method of bulk polymerization using a cationic polymerization catalyst, where an appropriate amount of a molecular-weight regulator is added thereto. Examples of the molecular weight regulator include low molecular acetal compounds having alkoxy groups such as methylal, methoxy methylal, dimethoxy methylal, trimethoxymethylal and oxymethylene di-n-butyl ether, alcohols such as methanol, ethanol and butanol, ester compounds, acid compounds, and water. Among these compounds, the low molecular acetal compounds having alkoxy groups are particularly preferable.

Also, examples of the cationic polymerization catalyst include lead tetrachloride, tin tetrachloride, titanium tetrachloride, aluminum trichloride, zinc chloride, vanadium trichloride, antimony trichloride, phosphorus pentafluoride, antimony pentafluoride, boron trifluoride, boron trifluoride coordination compounds such as boron trifluoride-diethyl ethelate, boron trifluoride-dibutyl ethelate, boron trifluoride-dioxanate, boron trifluoride-acetic anhydrate and boron trifluoride-triethylamine complex compounds, inorganic and organic acids such as perchloric acid, acetyl perchlorate, t-butyl perchlorate, hydroxyacetic acid, trichloroacetic acid, trifluoroacetic acid and p-toluene sulfonic acid, complex salt compounds such as triethyl oxonium tetrafluoroborate, triphenyl methyl hexafluoroantimonate, allyldiazonium hexafluorophosphate and allyldiazonium tetrafluoroborate, alkyl metal salts such as diethyl zinc, triethyl aluminum and diethyl aluminum chloride, heteropoly acid and isopoly acid, etc. Among these compounds, boron trifluoride and boron trifluoride coordination compounds such as boron trifluoride-diethyl ethelate, boron trifluoride-dibutyl ethelate, boron trifluoride-dioxanate, boron trifluoride-acetic anhydrate and boron trifluoride-triethylamine complex compounds are especially preferable. Such a catalyst can be used after it may be diluted with an organic solvent, etc. and then used.

There is no particular limitation for the polymerizer in the production of the linear polyacetal resin (A) used in the present invention. Known apparatuses may be used and in particular, a continuous polymerizer having two axles with paddles etc. is suitably used. It is preferred to keep the polymerization temperature at 65 to 135 degrees C. Deactiviation of the catalyst after polymerization is carried out by adding a basic compound or an aqueous solution thereof to a reaction product discharged from the polymerizer after the polymerization reaction or to a reaction product in the polymerizer.

Examples of the basic compound for neutralizing and deactivating the polymerization catalyst include ammonia, or amines such as triethylamine, tributylamine, triethanolamine and tributanolamine, or hydroxide salts of alkali metal or alkaline earth metal, and other known deactivators of the catalyst. It is preferred that, after the polymerization, an aqueous solution thereof is added to the product quickly to deactivate. After such a polymerization and a deactivation, if necessary, washing, separation/recovery of unreacted monomers, drying, etc. may be carried out by conventional methods.

The linear polyacetal resin (A) used in the present invention is obtained by the above method, the melt index thereof is adjusted from 1 to 50 g/10min. If the melt index is lower than the range, the resin composition having high rigidity and high dimensional stability cannot be easily obtained by blending the linear polyacetal resin (A) with branched or bridged polyacetal resin (B) as described later. On the other hand, if the melt index is higher than the range, the resin composition having high rigidity and being excellent in dimensional stability and creep characteristic cannot be easily obtained. Both of the cases are undesirable.

Next, the branched or crosslinked polyacetal resin (B) used in the present invention is obtained by copolymerizing (a) 99.49 to 95.0% by weight of trioxane, (b) 0.5 to 4.0% by weight of a compound selected from a mono-functional cyclic ether compound and a mono-functional cyclic formal compound, and (c) 0.01 to 1.0% by weight of a poly-functional glycidyl ether compound with the number of functional groups of 3 to 4, in which

the branched or crosslinked polyacetal resin (B) has a melt index of from 0.1 to 10 g/10min.

Wherein trioxane (a) and compound (b) selected from mono-functional cyclic ether compounds and mono-functional cyclic formal compounds, which are used in the production of the branched or crosslinked polyacetal resin (B), are compounds as described in detail in the illustration of the linear polyacetal resin (A). The compound (b) used in the production of the branched or crosslinked polyacetal resin (B) is same or different compared to the compound (b) used in the production of the linear polyacetal resin (A).

Also, the poly-functional glycidyl ether compound (c) with the number of functional groups of 3 to 4, which are used in the production of the branched or crosslinked polyacetal resin (B), refers to the compound having 3 to 4 glycidyl ether units in one molecule. The poly-functional glycidyl ether compound (c) is any compound selected from above compounds without limiting. For example, at least one compound selected from the group consisting of trimethylolpropane triglycidyl ether, glycerol triglycidyl ether and pentaerythritol tetraglycidyl ether is preferably used.

The branched or bridged polyacetal resin (B) used in the present invention is obtained by copolymerizing (a) 99.49 to 95.0% by weight of above trioxane, (b) 0.5 to 4.0% by weight of above compound, and (c) 0.01 to 1.0% by weight of above poly-functional glycidyl ether compound with the number of functional groups of 3 to 4. If the copolymerization ratio of the compound (b) and the poly-functional glycidyl ether compound (c) is lower or higher than the range, the polyacetal resin composition having high rigidity with dimensional stability and creep characteristics cannot be easily obtained by blending the branched or crosslinked polyacetal resin (B) with the linear polyacetal resin (A). For the branched or crosslinked polyacetal resin (B), copolymerization ratio of the compound (b) is especially preferably from 0.7 to 3.0% by weight, copolymerization ratio of the poly-functional glycidyl ether compound (c) is especially preferably from 0.02 to 0.5% by weight.

The branched or bridged polyacetal resin (B) used in the present invention is generally obtained, similar to the linear polyacetal resin (A), for example, by a method of cationic polymerization using a cationic polymerization catalyst, where an appropriate amount of a molecular-weight regulator is added thereto. Also, polymerizer, condition of the polymerization, deactivation of catalyst after polymerization and subsequent post-treatment, etc. can be conducted according to the method for producing the linear polyacetal resin (A).

The branched or bridged polyacetal resin (B) obtained by the above method and used in the present invention is adjusted to a melt index of from 0.1 to 10 g/10min. If the melt index is lower than the range, the resin composition having demanded dimensional stability and creep characteristics cannot be easily obtained. On the other hand, if the melt index is higher than the range, the resin composition having high rigidity and excellent in dimensional stability and creep characteristics cannot be easily obtained.

The polyacetal resin composition of the present invention is characterized by blending

(A) 99.9 to 90 parts by weight of a linear polyacetal resin
and
(B) 0.1 to 10 parts by weight of a branched or crosslinked polyacetal resin,
wherein the linear polyacetal resin (A) and the branched or crosslinked polyacetal resin (B) are selected so that the ratio between the melt index of the linear polyacetal resin (A) and the melt index of the branched or crosslinked polyacetal resin (B) satisfies the relation of the following formula (1):

$$0.02 \leqq MI_B/MI_A \leqq 1.5 \quad (1)$$

(wherein $MI_A$ is a melt index of the linear polyacetal resin (A) and $MI_B$ is a melt index of the branched or crosslinked polyacetal resin (B)).

If the amount of the branched or crosslinked polyacetal resin (B) to be blended is lower than the range, the resin composition having high rigidity and excellent in dimensional stability and creep characteristics cannot be easily obtained. On the other hand, if the amount is higher than the range, the resin composition having demanded dimensional stability and creep characteristics cannot be easily obtained.

Also, if the ratio of the melt index $MI_B$ of the branched or crosslinked polyacetal resin (B) to the melt index $MI_A$ of the linear polyacetal resin (A), $MI_B/MI_A$, is less than 0.02, the resin composition having demanded high rigidity as well as dimensional stability and creep characteristics cannot be easily obtained. On the other hand, the ratio of the melt index $MI_B/MI_A$ is over 1.5, the resin composition having high rigidity and excellent in dimensional stability cannot be easily obtained.

Also, in the invention, the melt index of the linear polyacetal resin (A), the melt index of the branched or crosslinked polyacetal resin (B) and the blending ratio of them are especially preferably controlled so that the melt index of a polyacetal resin composition in which the branched or crosslinked polyacetal resin (B) is blended with the linear polyacetal resin (A) satisfies the relation of the following formula (2) relative to the melt index of the linear polyacetal resin (A):

$$0.7 \leqq MI_A/MI_{AB} \leqq 1.4 \quad (2)$$

(wherein $MI_A$ is a melt index of the linear polyacetal resin (A) and $MI_{AB}$ is a melt index of the polyacetal resin composition).

If the ratio $MI_A/MI_{AB}$, which is the ratio of the melt index ($MI_A$) of the linear polyacetal resin (A) to the melt index ($MI_{AB}$) of the polyacetal resin composition is lower or higher than the range, the polyacetal resin composition having high rigidity with dimensional stability and characteristics cannot be easily obtained.

The polyacetal resin composition of the present invention is basically prepared by melt mixing the linear polyacetal resin (A) and the branched or crosslinked polyacetal resin (B). The process condition of the melt mixing is preferably at a temperature of from 180 to 270 degrees C and at least 30 seconds. An illustrative embodiment of the preparation method is not limiting, the method may be applied known equipments and methods, for example, mixing the required components using one-axle or two-axle extruders or other melt-mixer, and producing pellets for molding, etc.

The polyacetal resin composition of the present invention may preferably be blended with various stabilizers selected as necessary. Examples of the stabilizers include at least one compound selected from hindered phenol type compounds, nitrogen-including compounds, hydroxides of alkaline or alkaline earth metals, inorganic salts and carboxylates. Further, one or more common additives for thermoplastic resin, such as coloring agents e.g. dye, pigment etc., lubricants, releasing agents, antistatic agents, surfactants, or organic polymer materials, and inorganic or organic fillers in a form of fiber, powder and plate may be added as necessary as far as the object and effect of the present invention are not hindered.

THE EFFECT OF THE INVENTION

The polyacetal resin composition of the present invention has high rigidity, dimensional stability, and creep characteristics, and is also excellent in surface hardness, and slidability. The polyacetal resin composition can suitably be used as structural materials and/or functional parts, etc. in electric instruments, car parts, precision machine parts, etc.

EXAMPLES

Now, the present invention will be described in detail by reference to the Examples, which are not intended to limit the present invention. Various assessments were conducted according to the following methods.

[melt index]

Melt index (MI) was measured according to ASTM D-1238 at 190 degrees C, under a loading of 2160 g.

[Formulation of copolymer]

The formulation of copolymer was identified using $^1$H-NMR mesurement with hexafluoroisopropanol $d_2$ as a

solvent.

[Tensile Strength]

Test pieces for ISO were molded and the tensile strength was measured according to ISO method.

[Dimensional Change]

Tensile test pieces for ISO were molded, and test pieces were stood within the conditioned room at a temperature 23 degrees C, and humidity of 50% for 24 hour, and then sizes of test pieces were measured. After the measurement, test pieces were treated at 70 degrees C for 5 hours. Again, after the test pieces were stood within the conditioned room for 24 hours, sizes of test pieces were measured, the difference initial sizes and sizes after treatment was the dimensional change.

[Fracture Life]

Test pieces for ISO was molded, and then fracture life was measured using a tensile creep tester with lever. According to the level of fracture life, test pieces were assessed as excellent (E), good (G) and no good (NG).

Production Examples 1 to 9 and Comparative Production Examples 1 to 9

A continuous mixing reactor constituted from a barrel having a jacket for passing a heating (or cooling) medium at outside and having a shape of the cross section where two circles are partially overlapped, and rotating shafts equipped with a paddle was used, and trioxane (a), compound (b) selected from mono-functional cyclic ether compounds and mono-functional cyclic formal compounds, and poly-functional glycidyl ether compound (c) were added thereinto in a ratio shown in Tables 1 and 2 while each of two rotating shafts having a paddle was rotated at 150 rpm. Then, methylal was continuously fed as the molecular-weight regulator, and as the catalyst, boron trifluoride was added in an amount of 0.005% by weight to the trioxane, and the uniform mixture was bulk-polymerized. The reaction product discharged from the polymerizer was immediately passed through a grinder and added to an aqueous solution containing 0.05% by weight of triethylamine at 60 degrees C to deactivate the catalyst. After separation, washing and drying, a crude polyacetal copolymer (a linear polyacetal resin and a branched or crosslinked polyacetal resin) was obtained.
Then, to 100 parts by weight of the crude polyacetal copolymer were added 3% by weight of a 5% by weight aqueous solution of triethylamine and 0.3% by weight of pentaerythrityl-tetrakis [3-(3,5-di-tert-butyl-4-hydroxyphenyl) propionate], followed by subj ecting to melting and kneading at 210 degrees C in a twin extruder to remove unstable parts. Polyacetal resins in forms of pellet (linear polyacetal resins A1-A3, a1-a4, and branched or bridged polyacetal resins B1-B6, b1-b5) were obtained, and then the polyacetal resins were used in the preparation of the polyacetal resin compositions.
The formulation and melt index of these polyacetal resins are shown in Tables 1 and 2.

Examples 1-9

The linear polyacetal resin and the branched or crosslinked polyacetal resin within the scope of the present invention, which are obtained according to the method of the above production examples, are blended in the rate of both resins shown in Table 3, and in the rate of the melt index within the present invention, followed by subjecting to melting and kneading at 210 degrees C in a twin extruder to get pellets of the polyacetal resin composition. Their properties were estimated according to the above method. The results are shown in Table 3.
The linear polyacetal resin and the branched or crosslinked polyacetal resin, which are composed of the polyacetal resin composition, the ratio of the blend, and the ratio of the melt index are all within the present invention. Therefore, the resulting polyacetal resin composition has high rigidity, dimensional stability, and creep characteristics. Also, in any compositions, the property of high rigidity is satisfactory.

Comparative examples 1-15

As shown in Table 3, at least one of a linear polyacetal resin, a branched or crosslinked polyacetal resin, a rate of a blend, and a rate of a melt index were changed other than the condition of the present invention to blend the linear polyacetal resin and the branched or crosslinked polyacetal resin, followed by subjecting to melting and kneading at 210 degrees C in a twin extruder to get pellets of the polyacetal resin composition. Their properties were estimated according to the above method. The results are shown in Table 3.

Also, comparative examples 14 and 15 show the linear polyacetal resin without blending the branched or crosslinked polyacetal resin. If any of the linear polyacetal resin and the branched or crosslinked polyacetal resin, which are composed of the polyacetal resin composition, the ratio of the blend, and the ratio of the melt index are other than the region of the present invention, the polyacetal resin composition having high rigidity with dimensional stability and creep characteristics cannot be easily obtained.

Then, abbreviations in Tables are as follows.

Component (b)

DO: 1,3-dioxolan

BF: 1,4-butanediol formal

Component (c)

TMPTGE:trimethylol propane triglycidyl ether

PETGE: pentaerythritol tetraglycidyl ether

Table 1

| | Polyacetal resin No. | Trioxane (a) (wt%) | Compound (b) | | Melt index $MI_A$ (g/10min) |
|---|---|---|---|---|---|
| | | | Kind | (wt%) | |
| Production Ex. 1 | A1 | 98.3 | DO | 1.7 | 2.5 |
| Production Ex. 2 | A2 | 99.0 | DO | 1.0 | 2.5 |
| Production Ex. 3 | A3 | 98.3 | BF | 1.7 | 2.4 |
| Comparative Production Ex. 1 | a1 | 96.6 | DO | 3.4 | 2.5 |
| Comparative Production Ex. 2 | a2 | 99.8 | DO | 0.2 | 2.5 |
| Comparative Production Ex. 3 | a3 | 98.3 | DO | 1.7 | 0.5 |
| Comparative Production Ex. 4 | a4 | 98.3 | DO | 1.7 | 95 |

Table 2

| | Polyacetal resin No. | Trioxane (a) (wt%) | Compound (b) | | Compound (c) | | Melt index $MI_B$ (g/10min) |
|---|---|---|---|---|---|---|---|
| | | | Kind | (wt%) | Kind | (wt%) | |
| Production Ex. 4 | B1 | 98.2 | DO | 1.7 | TMPTGE | 0.1 | 1.5 |
| Production Ex. 5 | B2 | 98.2 | DO | 1.7 | TMPTGE | 0.1 | 0.9 |
| Production Ex. 6 | B3 | 98.2 | DO | 1.7 | TMPTGE | 0.1 | 5.0 |
| Production Ex. 7 | B4 | 98.9 | DO | 1.3 | TMPTGE | 0.1 | 1.5 |
| Production Ex. 8 | B5 | 98.0 | DO | 1.7 | TMPTGE | 0.3 | 0.9 |
| Production Ex. 9 | B6 | 98.2 | DO | 1.7 | PETGE | 0.1 | 1.5 |
| Comparative Production Ex. 5 | b1 | 98.2 | DO | 1.7 | TMPTGE | 0.1 | 20 |
| Comparative Production Ex. 6 | b2 | 96.8* | DO | 1.7* | TMPTGE | 1.5* | 0 |
| Comparative Production Ex. 7 | b3 | 98.3 | DO | 1.7 | TMPTGE | 0.005 | 1.5 |
| Comparative Production Ex. 8 | b4 | 99.7 | DO | 0.2 | TMPTGE | 0.1 | 1.5 |

(continued)

| | Polyacetal resin No. | Trioxane (a) (wt%) | Compound (b) Kind | Compound (b) (wt%) | Compound (c) Kind | Compound (c) (wt%) | Melt index $MI_B$ (g/10min) |
|---|---|---|---|---|---|---|---|
| Comparative Production Ex. 9 | b5 | 96.5 | DO | 5.0 | TMPTGE | 0.1 | 1.5 |

\* Charged amount is shown because the polyacetal resin is insoluble to hexafluoroisopropanol $d_2$.

Table 3

| | | Linear polyacetal resin (A) | | | Branched or closslinked polyacetal resin (B) | | | Polyacetal resin composition | | | Tensile strength (MPa) | Dimensional change (mm) | Fracture life |
|---|---|---|---|---|---|---|---|---|---|---|---|---|---|
| | | Polyacetal resin No. | Melt index $MI_A$ (g/10min) | Blending amount (wt. Pts) | Polyacetal resin No. | Melt index $MI_B$ (g/10min) | Blending amount (wt. pts) | $MI_B/MI_A$ | Melt index $MI_{AB}$ (g/10min) | $MI_A/MI_{AB}$ | | | |
| Examples | 1 | A1 | 2.5 | 97 | B1 | 1.5 | 3 | 0.6 | 2.4 | 1.0 | 69.5 | -0.03 | E |
| | 2 | A1 | 2.5 | 95 | B1 | 1.5 | 5 | 0.6 | 2.3 | 1.1 | 70.1 | -0.02 | E |
| | 3 | A1 | 2.5 | 92 | B1 | 1.5 | 8 | 0.6 | 2.3 | 1.1 | 70.5 | -0.04 | E |
| | 4 | A2 | 2.5 | 95 | B1 | 1.5 | 5 | 0.6 | 2.3 | 1.1 | 71.0 | -0.03 | E |
| | 5 | A3 | 2.4 | 95 | B1 | 1.5 | 5 | 0.63 | 2.2 | 1.1 | 69.8 | -0.02 | E |
| | 6 | A1 | 2.5 | 95 | B2 | 0.9 | 5 | 0.36 | 2.2 | 1.1 | 70.9 | -0.03 | E |
| | 7 | A1 | 2.5 | 95 | B4 | 1.5 | 5 | 0.6 | 2.3 | 1.1 | 70.3 | -0.03 | E |
| | 8 | A1 | 2.5 | 95 | B5 | 0.9 | 5 | 0.36 | 2.1 | 1.2 | 70.4 | -0.04 | E |
| | 9 | A1 | 2.5 | 95 | B6 | 1.5 | 5 | 0.6 | 2.1 | 1.2 | 70.2 | -0.02 | E |
| Comparative Examples | 1 | a1 | 2.5 | 95 | B1 | 1.5 | 5 | 0.6 | 2.4 | 1.0 | 64.8 | -0.09 | NG |
| | 2 | a2 | 2.5 | 95 | B1 | 1.5 | 5 | 0.6 | 2.2 | 1.1 | 71.5 | -0.10 | E |
| | 3 | a3 | 0.5 | 95 | B1 | 1.5 | 5 | 3.0 | 0.8 | 0.6 | 62.3 | -0.13 | E |
| | 4 | a4 | 95 | 95 | B1 | 1.5 | 5 | 0.016 | 78 | 1.2 | 63.2 | -0.07 | NG |
| | 5 | A1 | 2.5 | 95 | b1 | 20 | 5 | 8.0 | 4.8 | 0.5 | 65.4 | -0.08 | NG |
| | 6 | A1 | 2.5 | 95 | b2 | 0 | 5 | 0 | 1.7 | 1.5 | 68.3 | -0.09 | NG |
| | 7 | A1 | 2.5 | 95 | b3 | 1.5 | 5 | 0.6 | 2.4 | 1.0 | 62.9 | -0.09 | NG |
| | 8 | A1 | 2.5 | 95 | b4 | 1.5 | 5 | 0.6 | 2.4 | 1.0 | 69.1 | -0.08 | G |
| | 9 | A1 | 2.5 | 95 | b5 | 1.5 | 5 | 0.6 | 2.3 | 1.1 | 65.9 | -0.10 | G |
| | 10 | A1 | 2.5 | 99.95 | B1 | 1.5 | 0.05 | 0.6 | 2.5 | 1.0 | 64.3 | -0.09 | NG |
| | 11 | A1 | 2.5 | 80 | B1 | 1.5 | 20 | 0.6 | 1.7 | 1.5 | 70.2 | -0.11 | NG |
| | 12 | A1 | 2.5 | 95 | B3 | 5.0 | 5 | 2.0 | 2.7 | 0.9 | 64.9 | -0.07 | G |
| | 13 | A3 | 2.4 | 96 | B3 | 5.0 | 4 | 2.1 | 2.6 | 0.9 | 64.2 | -0.08 | G |
| | 14 | A1 | 2.5 | 100 | — | — | — | — | — | — | 62.7 | -0.09 | NG |
| | 15 | a1 | 2.5 | 100 | — | — | — | — | — | — | 60.0 | -0.12 | NG |

**Claims**

1. A polyacetal resin composition prepared by blending

(A) from 99.9 to 90 parts by weight of a linear polyacetal resin having a melt index of 1 to 50 g/10min obtained by copolymerizing (a) 99.5 to 97.5% by weight of trioxane and (b) 0. 5 to 2.5% by weight of a compound selected from the group consisting of a mono-functional cyclic ether compound and a mono-functional cyclic formal compound, with

(B) from 0.1 to 10 parts by weight of a branched or crosslinked polyacetal resin having a melt index of 0.1 to 10 g/10min obtained by copolymerizing (a) 99.49 to 95.0 % by weight of trioxane, (b) 0.5 to 4.0% by weight of a compound selected from the group consisting of a mono-functional cyclic ether compound and mono-functional cyclic formal compound and (c) 0.01 to 1.0% by weight of a poly-functional glycidyl ether compound with the number of functional groups of 3 to 4, in which

the linear polyacetal resin (A) and the branched or crosslinked polyacetal resin (B) are selected so that the ratio between the melt index of the linear polyacetal resin (A) and the melt index of the branched or crosslinked polyacetal resin (B) satisfies the relation of the following formula (1):

$$0.02 \leqq MI_B/MI_A \leqq 1.5 \qquad (1)$$

8

(where $MI_A$ is a melt index of the linear polyacetal resin (A) and $MI_B$ is a melt index of the branched or crosslinked polyacetal resin (B)).

**2.** The polyacetal resin composition as defined in claim 1, wherein the melt index of the linear polyacetal resin (A), the melt index of the branched or crosslinked polyacetal resin (B) and the blending ratio of them are controlled so that the melt index of a polyacetal resin composition in which the branched or crosslinked polyacetal resin (B) is blended with the linear polyacetal resin (A) satisfies the relation of the following formula (2) relative to the melt index of the linear polyacetal resin (A):

$$0.7 \leqq MI_A/MI_{AB} \leqq 1.4 \qquad (2)$$

(where $MI_A$ is a melt index of the linear polyacetal resin (A) and $MI_{AB}$ is a melt index of the polyacetal resin composition).

**3.** The polyacetal resin composition as defined in claim 1 or 2, wherein the poly-functional glycidyl ether compound (c) is at least one selected from the group consisting of trimethylol propane triglycidyl ether, glycerol triglycidyl ether and pentaerythritol tetraglycidyl ether.

**4.** The polyacetal resin composition as defined in claim 1 or 2, wherein the compound (b) is at least material selected from the group consisting of ethylene oxide, 1,3-dioxolane, 1,4-butanediol formal and diethylene glycol formal.

**Patentansprüche**

**1.** Polyacetalharzzusammensetzung, hergestellt durch Mischen von:

(A) 99,9 bis 90 Gewichtsteilen eines linearen Polyacetalharzes mit einem Schmelzindex von 1 bis 50 g/10 min, das durch Copolymerisieren von (a) 99,5 bis 97,5 Gew.-% Trioxan und (b) 0,5 bis 2,5 Gew.-% einer Verbindung, die aus der Gruppe ausgewählt ist, die aus einer monofunktionellen cyclischen Etherverbindung und einer monofunktionellen cyclischen Formalverbindung besteht, erhalten ist, mit
(B) 0,1 bis 10 Gewichtsteilen eines verzweigten oder vernetzten Polyacetalharzes mit einem Schmelzindex von 0,1 bis 10 g/10 min, das durch Copolymerisieren von (a) 99,49 bis 95,0 Gew.-% Trioxan, (b) 0,5 bis 4,0 Gew.-% einer Verbindung, die aus der Gruppe ausgewählt ist, die aus einer monofunktionellen cyclischen Etherverbindung und einer monofunktionellen cyclischen Formalverbindung besteht, und (c) 0,01 bis 1,0 Gew.-% einer polyfunktionellen Glycidyletherverbindung mit einer Zahl an funktionellen Gruppen von 3 bis 4 erhalten ist, wobei das lineare Polyacetalharz (A) und das verzweigte oder vernetzte Polyacetalharz (B) so gewählt sind, dass das Verhältnis zwischen dem Schmelzindex des linearen Polyacetalharzes (A) und dem Schmelzindex des verzweigten oder vernetzten Polyacetalharzes (B) die Beziehung der folgenden Formel (1) erfüllt:

$$0,02 \leq MI_B/MI_A \leq 1,5 \qquad (1)$$

(wobei $MI_A$ der Schmelzindex des linearen Polyacetalharzes (A) ist und $MI_B$ der Schmelzindex des verzweigten oder vernetzten Polyacetalharzes (B) ist).

**2.** Polyacetalharzzusammensetzung gemäß Anspruch 1, wobei der Schmelzindex des linearen Polyacetalharzes (A), der Schmelzindex des verzweigten oder vernetzten Polyacetalharzes (B) und das Mischungsverhältnis derselben so gesteuert sind, dass der Schmelzindex der Polyacetalharzzusammensetzung, in der das verzweigte oder vernetzte Polyacetalharz (B) mit dem linearen Polyacetalharz (A) gemischt ist, die Beziehung der folgenden Formel (2) bezüglich des Schmelzindexes des linearen Polyacetalharzes (A) erfüllt:

$$0,7 \leq MI_A/MI_{AB} \leq 1,4 \qquad (2)$$

(wobei MI$_A$ der Schmelzindex des linearen Polyacetalharzes (A) ist und MI$_{AB}$ der Schmelzindex der Polyacetalharzzusammensetzung ist).

3. Polyacetalharzzusammensetzung gemäß Anspruch 1 oder 2, wobei die polyfunktionelle Glycidyletherverbindung (c) wenigstens eine ist, die aus der Gruppe ausgewählt ist, die aus Trimethylolpropantriglycidylether, Glycerintriglycidylether und Pentaerythrittetraglycidylether besteht.

4. Polyacetalharzzusammensetzung gemäß Anspruch 1 oder 2, wobei die Verbindung (b) wenigstens ein Material ist, das aus der Gruppe ausgewählt ist, die aus Ethylenoxid, 1,3-Dioxolan, 1,4-Butandiolformal und Diethylenglycolformal besteht.

**Revendications**

1. Composition de résine polyacétal préparée en mélangeant

(A) de 99,9 à 90 parties en poids d'une résine polyacétal linéaire ayant un indice de fluage de 1 à 50 g/10 min obtenue par copolymérisation de (a) 99,5 % à 97,5 % en poids de trioxane et de (b) 0,5 % à 2,5 % en poids d'un composé choisi parmi le groupe consistant en un composé éther cyclique monofonctionnel et un composé formal cyclique monofonctionnel, avec
(B) de 0,1 à 10 parties en poids d'une résine polyacétal ramifiée ou réticulée ayant un indice de fluage de 0,1 à 10 g/10 min obtenue par copolymérisation de (a) 99,49 % à 95,0 % en poids de trioxane, (b) 0,5 % à 4,0 % en poids d'un composé choisi parmi le groupe consistant en un composé éther cyclique monofonctionnel et un composé formal cyclique monofonctionnel et (c) 0,01 % à 1,0 % en poids d'un composé glycidyl éther polyfonctionnel, le nombre de groupes fonctionnels étant égal à 3 à 4, dans laquelle
la résine polyacétal linéaire (A) et la résine polyacétal ramifiée ou réticulée (B) sont choisies de sorte que le rapport entre l'indice de fluage de la résine polyacétal linéaire (A) et l'indice de fluage de la résine polyacétal ramifiée ou réticulée (B) satisfasse la relation de la formule suivante (1) :

$$0,02 \leq MI_B/MI_A \leq 1,5 \qquad (1)$$

(où MI$_A$ est un indice de fluage de la résine polyacétal linéaire (A) et MI$_B$ est un indice de fluage de la résine polyacétal ramifiée ou réticulée (B)).

2. Composition de résine polyacétal selon la revendication 1, où l'indice de fluage de la résine polyacétal linéaire (A), l'indice de fluage de la résine polyacétal ramifiée ou réticulée (B) et leur rapport de mélange sont contrôlés de sorte que l'indice de fluage d'une composition de résine polyacétal dans laquelle la résine polyacétal ramifiée ou réticulée (B) est mélangée avec la résine polyacétal linéaire (A) satisfasse la relation de la formule suivante (2) par rapport à l'indice de fluage de la résine polyacétal linéaire (A) :

$$0,7 \leq MI_A/MI_{AB} \leq 1,4 \qquad (2)$$

(où MI$_A$ est un indice de fluage de la résine polyacétal linéaire (A) et MI$_{AB}$ est un indice de fluage de la composition de résine polyacétal).

3. Composition de résine polyacétal selon la revendication 1 ou 2, où le composé de glycidyl éther polyfonctionnel (c) est au moins l'un choisi parmi le groupe consistant en triméthylol propane triglycidyl éther, glycérol triglycidyl éther et pentaérythritol tétraglycidyl éther.

4. Composition de résine polyacétal selon la revendication 1 ou 2, où le composé (b) est au moins un matériau choisi parmi le groupe consistant en oxyde d'éthylène, 1,3-dioxolane, 1,4-butanediol formal et diéthylène glycol formal.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002003694 A
- JP 2001002886 A
- JP 2001002885 A
- JP 9241476 A
- JP 5279551 A
- JP 4108848 A
- JP 3263454 A
- JP 3000756 A

- JP 1020258 A
- JP 59129247 A
- JP 50030949 A
- JP 49058145 A
- JP 48097955 A
- JP 48030749 A
- JP 47014249 A